# FASCICULE DE BREVET EUROPEEN

(11) **EP 3 479 551 B1**
(45) Date de publication et mention de la délivrance du brevet: **04.08.2021**
(21) Numéro de dépôt: 17742817.4
(22) Date de dépôt: 29.06.2017
(51) Int. Cl.: H04L 29/08, G06F 11/00, H04W 4/00, H04W 8/00

(54) **PROCÉDÉ DE SYNCHRONISATION DE DONNÉES DE CONTEXTE DE FONCTIONS RÉSEAUX DANS UN RÉSEAU MOBILE**
VERFAHREN ZUR SYNCHRONISATION VON KONTEXTDATEN EINER NETZWERKFUNKTION IN EINEM MOBILFUNKNETZ
METHOD FOR SYNCHRONIZING CONTEXT DATA OF NETWORK FUNCTIONS IN A MOBILE NETWORK

(30) Priorité: 30.06.2016 FR 1656153
(43) Date de publication de la demande: 08.05.2019
(73) Titulaire: ORANGE, 92130 Issy-les-Moulineaux (FR)
(72) Inventeur: MASSICOT, Bernard, 92320 Issy Les Moulineaux (FR); DAOUD TRIKI, Khadija, 92190 Meudon (FR); KIESSLING, Lars, 92320 Châtillon (FR)
(74) Mandataire: Cabinet Beau de Loménie
(86) Numéro de dépôt international: PCT/FR2017/051739
(87) Numéro de publication internationale: WO 2018/002531

(56) Documents cités:
- WO-A2-2008/122641
- GB-A- 2 481 716

## Description

### Arrière-plan de l'invention

La présente invention se situe dans le domaine des réseaux de télécommunications et porte en particulier sur la gestion de fonctions réseaux exécutables dans un réseau mobile.

Elle concerne plus particulièrement la gestion de données traitées par de telles fonctions réseaux dans un réseau mobile, tel qu'un réseau de téléphonie mobile ou un réseau Wifi par exemple. Une « fonction réseau » au sens de la présente demande est définie notamment dans la norme ETSI NFV 003 v1.2.1 comme étant un bloc fonctionnel, dans une infrastructure réseau, qui présente des interfaces externes bien définies et un comportement fonctionnel bien défini.

De telles fonctions réseaux sont ainsi mises en œuvre par l'opérateur d'un réseau pour fournir la connectivité à ses clients et ont donc pour objet de permettre la connexion des terminaux à ce réseau. A cet effet, chaque fonction réseau présente au moins une interface vers une autre fonction réseau, de sorte à ce que toute connexion d'un terminal mobile avec le réseau mette en œuvre au moins deux fonctions réseaux interfacées ensemble de façon à pouvoir dialoguer. Dans le cas d'un réseau mobile séparé en un réseau d'accès radio, d'une part, et un cœur de réseau, d'autre part, de telles fonctions réseaux dans le cadre de la présente invention sont hébergées au sein du cœur de réseau, sur des équipements ne faisant pas partie du réseau d'accès radio.

Dans le cadre des réseaux futurs de téléphonie mobile, du type 5G et au-delà, une tendance se dégage pour distribuer les fonctions réseaux du cœur de réseau au plus près des usagers (ces fonctions réseaux faisant toujours partie du cœur de réseau mais n'étant plus centralisées comme elles le sont actuellement), afin d'améliorer la réactivé des réseaux dans l'exécution des fonctions. Ces fonctions réseaux seront de plus éclatées en de multiples sous-fonctions réseaux, et peuvent être implémentées aussi bien sous la forme de fonctions réseaux implémentées par des équipements physiques dédiés à celles-ci que sous la forme de fonctions réseaux virtualisées instanciées sur des équipements physiques standards. Pour servir un terminal mobile dans un réseau mobile, chaque fonction (ou sous-fonction) réseau a besoin de récupérer des données de contexte (données de profil, données temporaires...) propres au terminal mobile. Une fonction réseau peut ainsi s'exécuter en prenant les données de contexte du terminal mobile en entrée. De telles fonctions réseaux portent par exemple sur la gestion de mobilité d'un terminal de téléphonie mobile (« handover » dans les spécifications 3GPP) ou sur la mise à jour de la localisation d'un utilisateur d'un tel terminal (« location update » dans les spécifications 3GPP) ou sur la gestion des sessions d'un tel terminal (« session management » dans les spécifications 3GPP).

Une autre tendance qui se dégage aujourd'hui est de mettre en œuvre des fonctions réseaux dites « sans état », c'est-à-dire des fonctions réseaux séparées des données de contexte du terminal mobile associé. Autrement dit, les données de contexte d'un terminal mobile ne sont pas stockées en permanence dans l'espace mémoire d'une fonction réseau mais dans un espace mémoire indépendant, situé sur un même site que la fonction réseau, contrairement par exemple à l'organisation actuelle des réseaux 4G. Cette séparation permet notamment d'offrir une meilleure résilience du réseau. Si une fonction réseau donnée pose un problème, une autre fonction équivalente peut prendre le relais et accéder plus facilement aux données de contexte requises.

La distribution de telles fonctions réseaux sans état dans le cœur d'un réseau mobile présente cependant certaines difficultés en ce qui concerne notamment les contraintes que le réseau doit satisfaire. En particulier, le réseau mobile doit être capable de fournir les données de contexte aux fonctions réseaux avec une faible latence. Lorsqu'une fonction réseau est invoquée suite à un évènement dans le réseau, il est souhaitable que les données de contexte requises soient disponibles rapidement afin de ne pas ralentir l'exécution de ladite fonction.

Actuellement, lorsqu'un terminal mobile s'enregistre auprès d'une site (ou nœud) d'un opérateur dans un réseau 4G, les données de contexte propres au terminal dans le réseau 4G ne sont pas nécessairement disponible localement au niveau du site considéré. De façon connue, ce site peut alors récupérer, lors de ses échanges avec le terminal mobile, l'identifiant d'une autre fonction réseau qui s'est précédemment exécutée pour le terminal mobile. Le site concerné peut ainsi récupérer les données de contexte du terminal auprès d'un autre site dans lequel est mise en œuvre la fonction réseau ainsi identifiée. Cette approche ne permet cependant pas de répondre de façon satisfaisante aux exigences de latence évoquées ci-avant.

La demande de brevet GB 2 481 716 décrit un réseau mobile dans lequel des données applicatives d'un terminal mobile peuvent être sauvegardées localement au niveau des points d'accès du réseau d'accès de ce réseau mobile. Toutefois, ces données applicatives de sauvegardes ne sont pas des données de contexte prises en entrée de fonctions réseaux hébergées au sein du réseau cœur de ce réseau mobile, lequel n'est d'ailleurs absolument pas impacté par ces sauvegardes purement locales.

La présente invention propose de répondre notamment au problème décrit ci-dessus et vise, de manière générale, à améliorer l'accès d'une fonction réseau à une donnée dont elle a besoin pour s'exécuter dans un réseau mobile.

Le document WO 2008/122641 A2 divulgue un système de données pour souscripteurs nomades. Ce système comprend une base de données fournissant dans un réseau une source de données et de services accessible par divers processus de contrôle et de gestion requérant des informations de souscripteur.

### Objet et résumé de l'invention

### L'invention est définie dans le jeu de revendications ci-ioint.

A cet effet, la présente invention propose un procédé de synchronisation mis en œuvre, dans un réseau mobile, par un premier dispositif hébergeant une fonction réseau servant à la connexion d'un terminal mobile au réseau mobile, ledit réseau mobile comportant au moins un deuxième dispositif hébergeant ladite fonction réseau, le procédé comprenant les étapes suivantes :
- établissement d'une connexion avec un terminal mobile pour exécuter, en tant que dispositif principal, la fonction réseau en association avec ledit terminal mobile ;
- détermination de données de contexte associées au terminal mobile, lesdites données de contexte étant des données prises en entrée par la fonction réseau pour s'exécuter ;
- enregistrement des données de contexte dans une mémoire associée audit premier dispositif ; et
- envoi des données de contexte à au moins un deuxième dispositif, dit dispositif secondaire, hébergeant ladite fonction réseau dans ledit réseau mobile de sorte à synchroniser les données de contexte enregistrées par le premier dispositif et ledit au moins un dispositif secondaire.

L'invention permet de maintenir à jour les données de contexte, d'un terminal mobile, au niveau des dispositifs secondaires du réseau mobile. Les dispositifs secondaires peuvent ainsi enregistrer dans leur mémoire associée les données de contexte reçues. De cette manière, la fonction réseau, si elle est invoquée au niveau de l'un de ces dispositifs secondaires, peut rapidement récupérer les données de contexte nécessaires à son exécution, ce qui permet d'améliorer sensiblement la réactivité du réseau mobile.

Selon un mode de réalisation particulier, lors de l'étape d'envoi, le premier dispositif n'envoie que des modifications détectées dans lesdites données de contexte par rapport à des anciennes données de contexte, dudit terminal mobile, enregistrées en local avant ladite étape de détermination des données de contexte.

De cette manière, il est possible de limiter la quantité des données de contexte transmises par le dispositif principal pour synchroniser ses dispositifs secondaires, économisant de ce fait le trafic et les ressources requises dans le réseau mobile.

Selon un mode de réalisation particulier, le réseau mobile comprend une pluralité de deuxièmes dispositifs hébergeant ladite fonction réseau, et, lors de l'étape d'envoi, le premier dispositif envoie les données de contexte seulement à une sélection d'au moins un dispositif secondaire parmi la pluralité de deuxièmes dispositifs du réseau mobile de sorte qu'au moins un deuxième dispositif non sélectionné ne soit pas synchronisé avec le premier dispositif.

En limitant les dispositifs maintenus synchronisés dans le réseau mobile, on peut avantageusement économiser les ressources réseaux et le trafic nécessaires dans le réseau mobile pour mettre en œuvre une telle synchronisation. Comme indiqué par la suite, on synchronise par exemple uniquement des sites voisins d'un site principal afin de ne synchroniser que les sites secondaires qui sont les plus susceptibles de servir (c.-à-d. exécuter une fonction réseau pour) le terminal mobile par la suite.

Selon un mode de réalisation particulier, le procédé comprend en outre une étape d'obtention, par le premier dispositif, d'une liste identifiant au moins un deuxième dispositif voisin du premier dispositif dans la topologie du réseau mobile, la sélection d'au moins un dispositif secondaire consistant en cet au moins un deuxième dispositif voisin identifié dans ladite liste, permettant ainsi de limiter la synchronisation des données de contexte aux seuls sites ayant la plus forte probabilité de servir le terminal mobile lorsque celui se déplace.

Selon un mode de réalisation particulier, la sélection d'au moins un dispositif secondaire vers lequel les données de contexte sont envoyées lors de l'étape d'envoi est enregistrée dans une mémoire locale du (ou associée au) premier dispositif. Le dispositif principal est ainsi en mesure de déterminer facilement le ou les dispositifs du réseau mobile qu'il doit traiter en tant que dispositifs secondaires.

Selon un mode de réalisation particulier, le procédé comprend la réception d'un identifiant d'un unique dispositif secondaire dans le réseau mobile, dans lequel la sélection d'au moins un dispositif secondaire, vers lequel les données de contexte sont envoyées lors de l'étape d'envoi, ne comporte que ledit unique dispositif secondaire. De cette manière, il est possible de limiter encore d'avantage les ressources de réseau nécessaire pour maintenir synchroniser les données de contexte et assurer une bonne réactivité du réseau.

Selon un mode de réalisation particulier, le procédé comprend les étapes suivantes :
- détection d'au moins un deuxième dispositif non sélectionné, dit dispositif obsolète, vers lequel les données de contexte ne sont pas envoyées lors de l'étape d'envoi et détenant dans une mémoire associée des données de contexte obsolètes du terminal mobile ; et
- envoi d'une commande de suppression audit au moins un dispositif obsolète pour causer la suppression des données de contexte obsolètes.

L'envoi d'une telles commande de suppression permet avantageusement d'éviter que des données de contexte qui ne sont plus à jour (obsolètes) soient gardées en mémoire par un ou des dispositifs du réseau mobile. Il est ainsi possible de garantir une bonne cohérence des données de contexte dans le réseau mobile.

Selon un mode de réalisation particulier, le procédé comprend la réception d'un identifiant d'un deuxième dispositif du réseau mobile précédemment connecté audit terminal mobile pour exécuter, en tant que dispositif principal à la place dudit premier dispositif, la fonction réseau en association avec ledit terminal mobile ;
ledit au moins un dispositif obsolète étant déterminé à partir dudit identifiant.

Le premier dispositif, agissant en tant que dispositif principal, peut ainsi déterminer le ou les deuxièmes dispositifs du réseau mobile qui sont susceptibles de détenir en mémoire des données de contexte obsolètes et ainsi s'assurer que ces données obsolètes sont supprimées afin de garantir une bonne cohérence du réseau mobile.

Selon un mode de réalisation particulier, le procédé comprend l'envoi d'un identifiant du premier dispositif à un dispositif central du réseau mobile pour mémoriser de façon centralisée dans le réseau mobile l'identité du premier dispositif en tant que dispositif principal. De cette manière, un deuxième dispositif, agissant ultérieurement en tant que dispositif principal à la place du premier dispositif, pourra déterminer le dispositif ayant précédemment agi en tant que dispositif principal et en déduire notamment le ou les dispositifs du réseau mobile vers lesquels une commande de suppression doit être envoyée.

Selon un mode de réalisation particulier, le procédé comprend, après l'étape d'envoi des données de contexte, les étapes suivantes :
- réception d'une requête de mise à jour provenant d'un deuxième dispositif du réseau mobile vers lequel les données de contexte n'ont pas été envoyées lors de l'étape d'envoi ; et
- envoi des données de contexte en réponse à ladite requête de mise à jour.

De cette manière, lorsqu'un deuxième dispositif qui n'a pas été synchronisé devient ultérieurement dispositif principal, il est capable de récupérer les données de contexte à jour auprès du premier dispositif.

Selon un mode de réalisation particulier, l'étape de détermination de données de contexte associées au terminal mobile comprend, après l'étape d'établissement d'une connexion avec un terminal mobile :
- détection qu'aucune donnée de contexte, associée au terminal mobile, n'est contenue dans la mémoire associée audit premier dispositif ;
- récupération, auprès d'un dispositif centralisé du réseau mobile, d'un identifiant d'un deuxième dispositif du réseau mobile précédemment connecté audit terminal mobile pour exécuter, en tant que dispositif principal à la place dudit premier dispositif, la fonction réseau en association avec ledit terminal mobile ; et
- envoi d'une requête de synchronisation au deuxième dispositif correspondant audit identifiant de sorte à récupérer des données de contexte enregistrées par le deuxième dispositif.

De cette manière, lorsqu'un dispositif du réseau mobile devient dispositif principal et détecte qu'il ne dispose d'aucune données de contexte dans sa mémoire pour le terminal mobile, il est capable de récupérer facilement les données de contexte à jour pour exécuter la fonction réseau.

Dans un mode particulier de réalisation, les différentes étapes du procédé de synchronisation sont déterminées par des instructions de programmes d'ordinateurs.

En conséquence, l'invention vise aussi un programme d'ordinateur sur un support d'informations, ce programme étant susceptible d'être mis en œuvre dans un dispositif ou dans un ordinateur, ce programme comportant des instructions adaptées à la mise en œuvre des étapes d'un procédé de synchronisation tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un dispositif hébergeant une fonction réseau dans un réseau mobile, ledit réseau mobile comportant au moins un deuxième dispositif hébergeant ladite fonction réseau, ladite fonction réseau servant à la connexion d'un terminal mobile au réseau mobile, le dispositif comprenant :
- un module d'établissement de connexion pour établir une connexion avec un terminal mobile pour que ledit dispositif exécute, en tant que dispositif principal, la fonction réseau en association avec ledit terminal mobile ;
- un module de détermination pour déterminer des données de contexte associées au terminal mobile, lesdites données de contexte étant des données prises en entrée par la fonction réseau pour s'exécuter ;
- un module d'enregistrement pour enregistrer des données de contexte dans une mémoire associée audit premier dispositif ; et
- un module d'envoi pour envoyer les données de contexte à au moins un deuxième dispositif, dit dispositif secondaire, hébergeant ladite fonction réseau dans ledit réseau mobile de sorte à synchroniser les données de contexte enregistrées par ledit dispositif et ledit au moins un dispositif secondaire.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

On notera que les différents modes de réalisation mentionnés ci-avant en relation avec le procédé de synchronisation de l'invention ainsi que les avantages associés s'appliquent de façon analogue au dispositif de l'invention.

Ainsi, selon un mode de réalisation particulier, le réseau mobile comprend une pluralité de deuxièmes dispositifs hébergeant ladite fonction réseau,
le module d'envoi étant configuré pour envoyer les données de contexte seulement à une sélection d'au moins un dispositif secondaire parmi la pluralité de deuxièmes dispositifs du réseau mobile de sorte qu'au moins un deuxième dispositif non sélectionné ne soit pas synchronisé avec le premier dispositif.

Selon un mode de réalisation particulier, la sélection d'au moins un dispositif secondaire, vers lequel le module d'envoi est configuré pour envoyer les données de contexte, est enregistrée dans une mémoire locale du premier dispositif électronique.

### Brève description des figures

D'autres caractéristiques et avantages de l'invention apparaîtront à la lecture de la description qui suit, faite en référence aux dessins annexés dans lesquels :
- la figure 1 représente la structure d'un réseau mobile comportant des dispositifs et un dispositif central, selon un mode de réalisation particulier de l'invention ;
- la figure 2 représente schématiquement la structure d'un dispositif du réseau mobile tel qu'illustré en figure 1 ;
- la figure 3 représente, sous forme d'un diagramme, les étapes d'un procédé de synchronisation, selon un mode de réalisation particulier de l'invention ;
- la figure 4 représente, sous forme d'un diagramme, les étapes d'un procédé de synchronisation, selon un mode de réalisation particulier de l'invention ;
- les figures 5 et 6 représente un mode de réalisation particulier de l'invention ; et
- les figures 7 et 8 représente un mode de réalisation particulier de l'invention.

### Description détaillée de modes de réalisation

Comme déjà indiqué, l'invention concerne l'accès d'une fonction réseau à certaines données dans un réseau mobile, et plus particulièrement, l'accès à des données de contexte associées à un terminal mobile pour permettre à ladite fonction de s'exécuter.

Dans le présent exposé, on entend par « données de contexte » des données propres à un terminal mobile et qui sont prises en entrée par une fonction réseau destinée à être exécutée pour (en association avec) le terminal mobile, par exemple pour réaliser une procédure donnée en réponse à un évènement dans le réseau. Les données de contexte à récupérer par une fonction réseau pour s'exécuter peuvent comprendre des données statiques, telles que des données de profil de l'utilisateur du terminal mobile considéré, et/ou des données dynamiques attribuées au terminal mobile (ou à son utilisateur) pour s'enregistrer auprès et interagir avec le réseau mobile.

Ces données de contextes sont donc des données utilisées pour l'exécution de fonctions réseaux servant à la connexion du terminal mobile au réseau mobile. A ce titre, elles se distinguent de simples données applicatives servant, elles, principalement au fonctionnement d'une application lancée sur un terminal mobile connecté au réseau mobile. De telles données de contexte ne sont donc pas nécessairement visibles par l'utilisateur du terminal ou les applications tournant sur ce terminal.

Ces données dynamiques peuvent comprendre, par exemple, au moins l'un parmi des données d'état représentatives de l'état (connecté/non connecté, en cours d'utilisation...) du terminal mobile vis-à-vis du réseau mobile, un identifiant temporaire attribué au terminal mobile, des données représentatives de la localisation du terminal mobile, des données caractérisant le trafic du terminal mobile dans le réseau, et une ou des adresses de point d'accès au réseau mobile. La notion de données de contexte étant bien connue de l'homme du métier, elle ne sera pas d'avantage décrite ici.

Dans ce document, des modes de réalisation non limitatifs de l'invention sont décrits dans le cadre de fonctions réseaux mises en œuvre dans un réseau mobile de téléphonie, de type 5G par exemple. Comme le comprend l'homme du métier, l'invention s'applique plus généralement à tous types de réseau mobile, notamment aux réseaux de téléphonie et réseaux Wifi.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

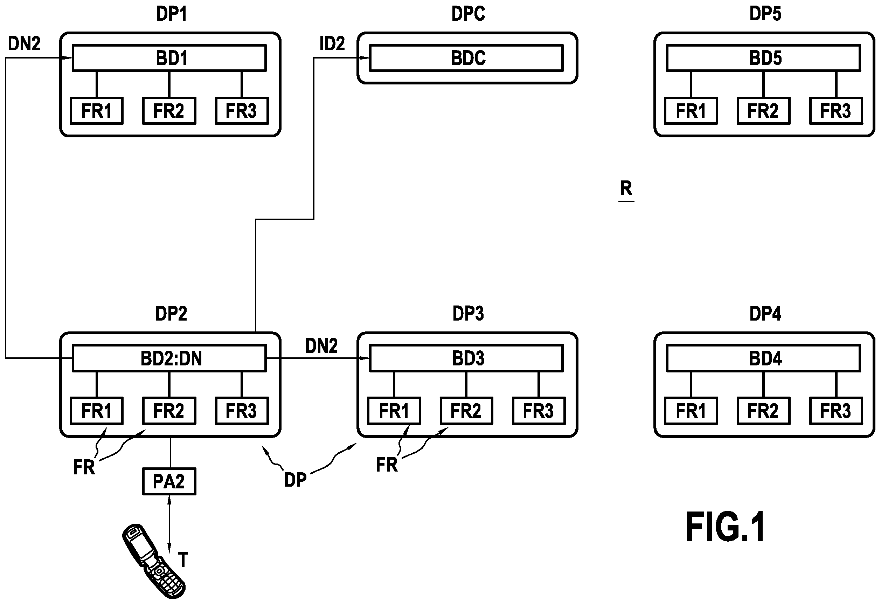

La **figure 1** représente un réseau de téléphonie mobile R comportant des dispositifs (ou systèmes) DP1 à DP5, notés collectivement DP, et un dispositif (ou système) central DPC. Dans cet exemple, chaque dispositif DP forme un nœud du réseau mobile R et est situé sur un site distinct géré par l'opérateur du réseau R. Un tel site se présente par exemple sous la forme d'un ensemble d'équipements permettant de gérer l'accès d'un terminal mobile T à des services du réseau mobile R.

La notion de site dans le domaine des réseaux de communication mobiles est bien connue et ne sera pas décrite plus en détail ici. Cependant, il convient de rappeler qu'un réseau de communication mobile peut être séparé en deux parties, à savoir d'une part un réseau d'accès radio comprenant des stations de bases (par exemple eNodeB pour un réseau mobile de 4^{ème} génération), éventuellement associées à des contrôleurs d'accès radio, permettant aux terminaux mobiles de communiquer avec le réseau par voie radio et d'autre part un cœur de réseau comprenant un certain nombre de nœuds gérant notamment l'accès au réseau, ou à des réseaux externes au travers de celui-ci. Les dispositifs DP susmentionnées font ainsi partie du cœur de réseau, et non du réseau d'accès du réseau mobile R.

Selon un exemple particulier, les dispositifs DP se présentent sous la forme d'un serveur ou, alternativement, sous la forme d'un réseau local comprenant une pluralité de serveurs (ou plus généralement des équipements pour la gestion de fonctions réseaux FR du réseau R).

Dans cet exemple, chaque dispositif DP du réseau R présente une structure identique et fonctionne de façon identique, bien que d'autres modes de réalisation soient possibles. On suppose ici que chaque dispositif DP est configuré pour pouvoir exécuter 3 fonctions réseaux FR1 à FR3 en association avec un terminal mobile tel que le terminal T dans cet exemple. Les fonctions réseaux FR1-FR3 sont donc ici distribuées dans le réseau mobile R afin d'être exécutées au plus près du terminal mobile T de l'usager, comme expliqué par la suite. Comme déjà expliqué, cette distribution permet notamment une grande réactivité d'exécution des fonctions réseaux dans le réseau mobile R.

Dans cet exemple, les dispositifs DP mettent tous en œuvre les mêmes fonctions réseau FR1-FR3. On peut toutefois envisager que les fonctions réseaux FR diffèrent au moins en partie d'un dispositif DP à un autre.

Chaque dispositif DP1 à DP5 comporte en outre une base de données (ou mémoire) respective BD1 à BD5 configurée pour stocker en mémoire des données nécessaires pour exécuter les fonctions réseaux FR1 à FR3, et plus particulièrement, pour stocker des données de contexte DN associées au terminal mobile T.

Pour servir le terminal mobile T dans le réseau R, chaque fonction réseau FR doit récupérer des données de contexte comme précédemment définies (données de profil, données temporaires...) associées au terminal mobile T. Les fonctions réseaux FR peuvent ainsi s'exécuter, dans le cœur de réseau du réseau mobile R, en prenant les données de contexte du terminal mobile T en entrée. Les fonctions réseaux FR, servant à la connexion du terminal mobile T au réseau mobile R, portent par exemple sur la gestion de mobilité du terminal mobile T, sur la localisation d'un utilisateur dudit terminal T ou encore sur la gestion des sessions du terminal mobile T. L'homme du métier saura adapter les fonctions réseaux selon les besoins du cas d'espèce.

De plus, on suppose dans cet exemple que les fonctions réseaux FR sont des fonctions réseau « sans état » comme précédemment définies, à savoir, dans cet exemple, des fonctions réseaux séparées des données de contexte du terminal mobile T. Les données de contexte du terminal mobile T ne sont pas stockées en permanence dans un espace mémoire des fonctions réseaux FR mais dans la mémoire indépendante DB1-DB5 associée au dispositif respectif DP1-DP5. Dans l'exemple envisagé ici, les bases de données DB1-DB5 sont disposées en local dans le dispositif correspondant DP1-DP5. En variante, les bases de données DB1-DB5 peuvent être agencées hors du dispositif DP1-DP5 correspondant mais dans un réseau local associé audit dispositif DP1-DP5 correspondant. Le stockage de données de contexte dans un espace mémoire distinct de l'espace mémoire des fonctions réseaux FR permet notamment d'offrir une meilleure résilience du réseau R, comme déjà indiqué. Si une fonction réseau FR donnée pose un problème, une autre fonction FR équivalente peut prendre le relais et accéder plus facilement aux données de contexte requises.

Par ailleurs, dans l'exemple considéré ici, les base de données DB1-DB5 sont partagées dans chaque dispositif DP entre les fonctions réseaux FR1-FR3. D'autres mises en œuvre avec des mémoires dédiées sont possibles.

De plus, dans l'exemple représenté en **figure 1****,** chaque dispositif DP1-DP5 est dédié, au sein du cœur de réseau du réseau mobile R, à une zone géographique donnée. Lorsque le terminal mobile T se trouve dans une zone géographique donnée, il s'enregistre auprès du réseau mobile R (procédure d'attachement au réseau), puis c'est le dispositif DP associé à la zone géographique dans laquelle se trouve le terminal mobile T qui prend en charge ledit terminal T pour exécuter la ou les fonctions réseaux FR.

Dans cet exemple, le terminal mobile T est un terminal de téléphonie mobile, tel qu'un téléphone mobile par exemple.

D'autre part, le dispositif central DPC comporte une base de données (ou mémoire) centrale BDC configurée pour stocker des données utiles au réseau mobile R, en particulier des données de profil (ou de souscription) de l'usager du terminal mobile T. Chaque dispositif DP est ici configuré pour communiquer via le réseau R avec le dispositif central DPC de l'opérateur.

On comprendra que certains éléments généralement présents dans un réseau mobile de communication ont été volontairement omis car ils ne sont pas nécessaires à la compréhension de la présente invention. On comprendra également que les dispositifs DP représentés en **figure 1** ne constituent qu'un exemple de réalisation, d'autres mises en œuvre étant possibles dans le cadre de l'invention.

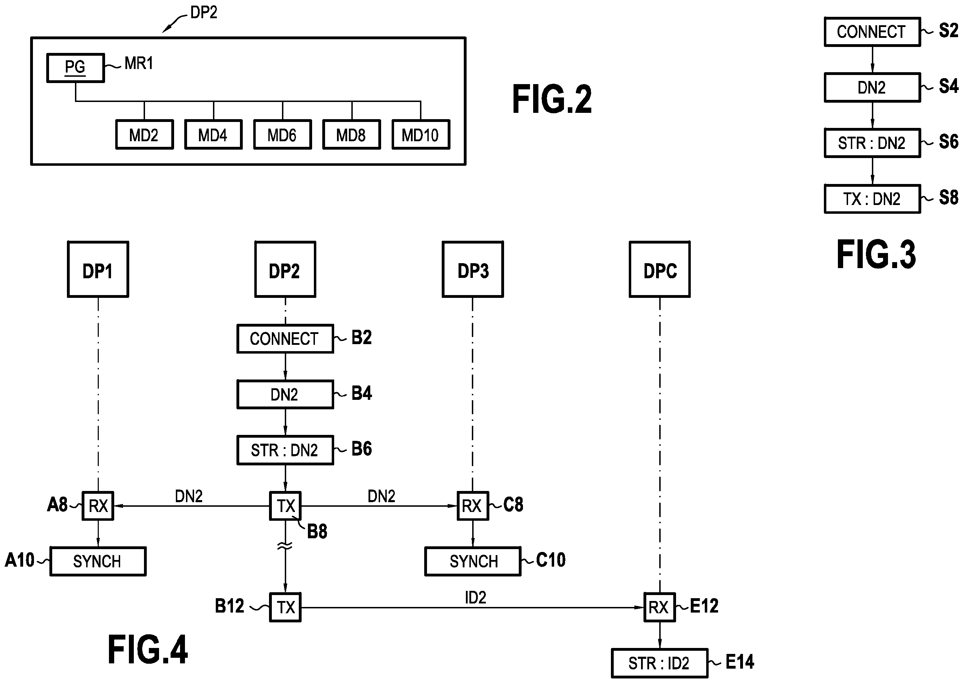

La structure du dispositif DP2 est à présent décrite en référence aux **figures 1** et **2****,** conformément à un mode de réalisation particulier de l'invention. On suppose dans cet exemple que les structures des autres dispositifs DP sont identiques à celle dispositif DP2, de sorte qu'elles ne seront pas décrites ici pas souci de simplicité.

Plus précisément, le dispositif DP2 comprend dans cet exemple au moins un processeur (non représenté) piloté par un programme d'ordinateur PG, de sorte à mettre en œuvre des modules MD2 à MD10, à savoir : un module d'établissement de connexion MD2, un module de détermination MD4, un module d'enregistrement MD6, un module d'envoi MD8 et un module de synchronisation MD10.

Dans cet exemple, le programme d'ordinateur PG est stocké dans une mémoire non volatile MR1 du dispositif DP2, cette mémoire constituant un support d'enregistrement conforme à un mode de réalisation particulier, lisible par le dispositif DP2. Le programme d'ordinateur PG comporte en outre des instructions pour l'exécution des étapes d'un procédé de synchronisation selon différents modes de réalisation particuliers décrits ultérieurement.

Plus précisément, le module d'établissement de connexion MD2 est configuré pour établir une connexion avec le terminal mobile T pour que ledit dispositif DP2 exécute, en tant que dispositif principal, une fonction réseau FR en association avec ledit terminal T. Pour établir une telle connexion, le dispositif DP2 et le terminal T communiquent ensemble de sorte que le dispositif DP2 reconnaisse le terminal T (enregistrement du terminal T).

On suppose ici par exemple que le terminal T se connecte au réseau R via un point d'accès PA2. Une fois le terminal T reconnu par le dispositif DP2, ce dernier est configuré pour exécuter par exemple la fonction réseau FR1 en association avec le terminal T.

Le module de détermination MD4 est configuré pour déterminer des données de contexte DN2 associées au terminal mobile T, ces données de contexte DN2 étant des données prises en entrée par la fonction réseau FR1 pour s'exécuter.

Le module d'enregistrement MD6 est configuré pour enregistrer les données de contexte DN2, obtenues par le module de détermination MD4, dans la base de données DB2 associée.

Le module d'envoi MD8 est configuré pour envoyer les données de contexte DN2 à au moins un autre deuxième dispositif DP (ici DP1, DP3, DP4 et/ou DP5), dit dispositif secondaire, hébergeant la fonction réseau FR1 dans le réseau mobile R de sorte à synchroniser les données de contexte DN2 enregistrées par le dispositif DP2 et ledit au moins un dispositif secondaire.

Le fonctionnement des modules MD2-MD10 de chaque dispositif DP apparaîtra plus précisément dans les exemples de réalisation décrits ci-après. On comprendra que les modules MD2-MD10 tels que représentés en **figure 2** ne représente qu'un exemple de mise en œuvre non limitatif de l'invention.

La distribution des fonctions réseaux FR sans état (ici plus particulièrement de la fonction FR1) dans le réseau mobile R présente une difficulté du fait que, pour s'exécuter, une fonction réseau FR doit au préalable récupérer les données de contexte du terminal T qu'elle prend en entrée. Afin de limiter les temps de latence du réseau mobile R, et ainsi améliorer sa réactivité, l'invention propose de configurer les dispositifs DP afin qu'ils se synchronisent entre eux. De cette manière, les données de contexte à jour du terminal mobile T sont rapidement accessibles par chaque fonction FR dans les dispositifs DP.

Les étapes d'un procédé de synchronisation mis en œuvre par le dispositif DP2 dans le réseau mobile R, comme représenté en **figures 1** et **2****,** sont à présent décrites en référence à la **figure 3****.** On suppose dans cet exemple que le terminal mobile T se trouve dans la zone géographique du dispositif DP2, ce dernier devant alors agir en tant que dispositif principal pour exécuter la fonction réseau FR1 en association avec ledit terminal T. Plus particulièrement, cet exemple de procédé de synchronisation, mis en œuvre par le dispositif DP2, comprend les étapes suivantes :
- établissement (étape S2) d'une connexion avec le terminal mobile T pour exécuter, en tant que dispositif principal, la fonction réseau FR1 en association avec le terminal mobile T ;
- détermination (étape S4) de données de contexte DN2 associées au terminal mobile T, ces données de contexte DN2 étant des données prises en entrée (c.-à-d. des données d'entrées) par la fonction réseau FR1 pour s'exécuter ;
- enregistrement (étape S6) des données de contexte DN2 dans la mémoire BD2 associée du dispositif DP2 ; et
- envoi (étape S8) des données de contexte DN2 à au moins un autre dispositif DP, dit dispositif secondaire, hébergeant la fonction réseau FR1 dans le réseau mobile R de sorte à synchroniser les données de contexte DN2 enregistrées par le dispositif DP2 et ce(s) dispositif(s) secondaire(s).

Grâce à l'invention, des dispositifs DP (agissant en tant que dispositifs secondaires) autres que le dispositif DP1 (agissant en tant que dispositif principal) reçoivent les données de contexte DN2 à jour du terminal mobile T. Ces dispositifs DP secondaires sont configurés pour enregistrer dans leur base de données respective les données de contexte DN2 reçues. De cette manière, les dispositifs DP secondaires sont maintenus synchronisés par le dispositif DP2 principal.

Le dispositif DP2, agissant en tant que dispositif principal, peut envoyer lors de l'étape S8 les données de contexte à tous les autres dispositifs DP du réseau mobile R ou, alternativement, à seulement certains parmi les autres dispositifs DP1, DP3, DP4 et DP5 du réseau mobile R. Plus particulièrement, il a été observé qu'il peut être difficile de maintenir une cohérence dans le réseau mobile notamment lorsque la taille du réseau est importante et que la fonction réseau concernée est distribuée de façon importante dans le réseau. Du fait du grand nombre de sites dans un réseau très distribué (par exemple dans un réseau d'opérateur contenant des centaines de sites), il peut devenir difficile d'assurer la synchronisation des données de contexte d'un terminal mobile en cas de synchronisation de tous les sites distribués.

Selon un mode de réalisation particulier, l'invention propose par conséquent d'adapter le principe décrit ci-dessus de sorte que seuls certains sites soient synchronisés parmi une pluralité de sites du réseau mobile. En limitant les sites maintenus synchronisés dans le réseau mobile, on peut avantageusement économiser les ressources réseaux et le trafic nécessaires dans le réseau mobile pour mettre en œuvre un telle synchronisation. Comme indiqué par la suite, on synchronise par exemple uniquement des sites voisins d'un site principal afin de ne synchroniser que les sites secondaires qui sont le plus susceptibles de servir (c.-à-d. exécuter une fonction réseau FR pour) le terminal mobile T par la suite.

Un mode de réalisation particulier est à présent décrit en référence aux **figures 1****,** **2** et **4****.** Plus précisément, le dispositif DP2 représenté en **figures 1** et **2** met en œuvre un procédé de synchronisation en exécutant le programme d'ordinateur PG.

On suppose à nouveau que le terminal mobile T se trouve dans la zone géographique du dispositif DP2, ce dernier agissant alors en tant que dispositif principal pour exécuter la fonction réseau FR1 en association avec ledit terminal T.

Au cours d'une étape de connexion B2 (identique à l'étape S2 illustrée en **figure 3****),** le dispositif DP2 établit une connexion avec le terminal mobile T pour exécuter, en tant que dispositif principal, la fonction réseau FR1 qu'il héberge en association avec ledit terminal mobile T. L'établissement de la connexion peut prendre toute forme appropriée, telle qu'un échange de données afin que le dispositif DP2 reconnaisse le terminal T et soit en capacité d'exécuter la fonction réseau FR1 en association avec le terminal T.

Dans un exemple particulier, on suppose que le dispositif DP2 dispose déjà de données de contexte associées au terminal T dans sa base de données BD2, ces données de contexte étant des données d'entrée requises pour exécuter la fonction réseau FR1. Ces données de contexte ont par exemple été préalablement obtenues et enregistrées par le dispositif DP2, agissant en tant que dispositif secondaire, selon le principe du procédé de synchronisation décrit ci-après. On suppose en outre que le dispositif DP2 exécute (ou a exécuté) la fonction réseau FR1 en association avec le terminal T.

Au cours d'une étape de détermination B4 (identique à l'étape S4 illustrée en **figure 3****),** le dispositif DP2 détermine ultérieurement de nouvelles données de contexte (notées DN2) du terminal mobile T, ces données DN2 étant des données d'entrée requises pour exécuter la fonction réseau FR1.

Le dispositif DP2 enregistre (étape B6) alors ces données de contexte DN2 dans sa base de données BD2, comme déjà décrit en référence à l'étape S6 illustré en **figure 3****.**

Au cours d'une étape d'envoi B8, le dispositif DP2 envoie les données de contexte DN2, déterminées lors de l'étape B4, seulement à une sélection d'au moins un dispositif secondaire parmi la pluralité des dispositifs DP autres que le dispositif principal DP1, de sorte qu'au moins un dispositif DP non sélectionné (i.e. ne faisant pas partie de cette sélection) ne soit pas synchronisé avec le dispositif principal DP2. Autrement dit, le dispositif DP2, agissant en tant que dispositif principal, n'envoie pas les données de contexte DN2 lors de l'étape B8 à au moins l'un parmi les dispositifs DP1, DP3, DP4 et DP5.

Comme illustré en **figure 1****,** on suppose ici que le dispositif DP2, agissant en tant que dispositif principal, envoie lors de l'étape B8 les données de contexte DN2 aux dispositifs DP1 et DP3 mais pas aux dispositifs DP4 et DP5. Par conséquent, seuls les dispositifs DP1 et DP3 parmi les dispositifs DP autres que le dispositif DP2 sont des dispositifs secondaires au sens de l'invention.

Dans l'exemple décrit ici, les dispositifs secondaires DP1 et DP3 sélectionnés par le dispositif principal DP2 sont des dispositifs voisins, c'est-à-dire des dispositifs se trouvant à proximité géographique du dispositif DP2 (par exemple à une distance inférieure ou égale à une distance maximale prédéfinie). De façon avantageuse, seuls les dispositifs (et sites) voisins du dispositif principal DP2 sont maintenus synchronisés avec le dispositif principal DP2 ce qui permet de limiter les ressources réseau (trafic, équipements...) nécessaires tout en garantissant un latence réduite du réseau mobile R. En effet, lorsque le terminal mobile T se déplace, les dispositifs secondaires DP1 et DP3 sont les dispositifs les plus susceptibles de devenir par la suite dispositif principal afin de servir à leur tour le terminal mobile T.

Dans un exemple particulier, le dispositif DP2, agissant en tant que dispositif principal, détermine les dispositifs secondaires DP, vers lesquels les données de contexte DN2 doivent être envoyées lors de l'étape B8, à partir d'une liste (ou sélection) prédéfinie identifiant ces dispositifs secondaires DP, cette liste étant par exemple enregistrée dans une mémoire locale ou associée du dispositif DP2 (dans la base de données DB2 par exemple) suite à son obtention par le dispositif DP2.

Ainsi, dans un exemple particulier, pour chaque dispositif DP, une liste des dispositifs voisins dans la topologie du réseau R peut lui être transmise au préalable par un dispositif central (non représenté) ayant une vision globale de la topologie de ce réseau, cette liste pouvant alors être mise à jour automatiquement lorsque cette topologie est modifiée (par exemple quand l'opérateur éteint ou arrête certains sites la nuit). Alternativement, le dispositif DP2 peut, lors de la détermination des dispositifs secondaires DP auxquels envoyer les données DN2, transmettre une requête d'interrogation (par exemple de type DNS) à un serveur du réseau R (en particulier un serveur DNS), mémorisant pour chaque dispositif DP une liste des dispositifs voisins auxquels envoyer les données DN2, qu'il peut lui retourner dans un message de réponse à cette requête. Cela évite à l'opérateur du réseau R une mise à jour systématique de l'ensemble des dispositifs ou sites de ce réseau R dès que la topologie du réseau change, et donc permet d'optimiser la charge de signalisation sur le réseau.

Les dispositifs secondaires DP1 et DP3 reçoivent les données de contexte DN2 respectivement lors des étapes A8 et C8. Les dispositifs secondaires DP1 et DP3 se synchronisent ensuite respectivement lors des étapes A10 et C10, à partir des données de contexte DN2 reçues. Plus particulièrement, les dispositifs secondaires DP1 et DP3 enregistrent les données de contexte DN2 reçues lors des étapes A8 etC8 afin de mettre à jour leur base de données BD1 et BD3.

Selon un exemple particulier, le dispositif DP2, agissant en tant que dispositif principal, envoie également (étape B12) un identifiant ID2 dudit dispositif DP2 au dispositif central DPC. Le dispositif central DPC reçoit l'identifiant ID2 du dispositif DP2 (étape E12) puis l'enregistre dans sa base de données centrale BDC (étape E14). Comme expliqué ultérieurement, cet enregistrement E14 permet par la suite au dispositif central DPC d'indiquer à un dispositif DP, autres que les dispositifs principal et secondaires DP1-DP3, l'identité du dispositif principal actuel (DP2).

Selon un exemple particulier, le dispositif DP2, agissant en tant que dispositif principal, n'envoie pas lors de l'étape B8 toutes les données de contexte DN2 dont il dispose aux dispositifs secondaires DP1, DP3, mais uniquement des modifications détectées dans les données de contexte DN2 par rapport à des anciennes données de contexte, du terminal T, enregistrées dans la base de données BD2 avant les étapes B4-B6 (autrement dit, le dispositif DP2 n'envoie que les modifications apportées aux données de contexte DN2 par rapport à une précédente mise à jour). De cette manière, il est possible de limiter la quantité de données transmises par le dispositif principal pour synchroniser ses dispositifs secondaires, économisant de ce fait le trafic et les ressources requises dans le réseau R.

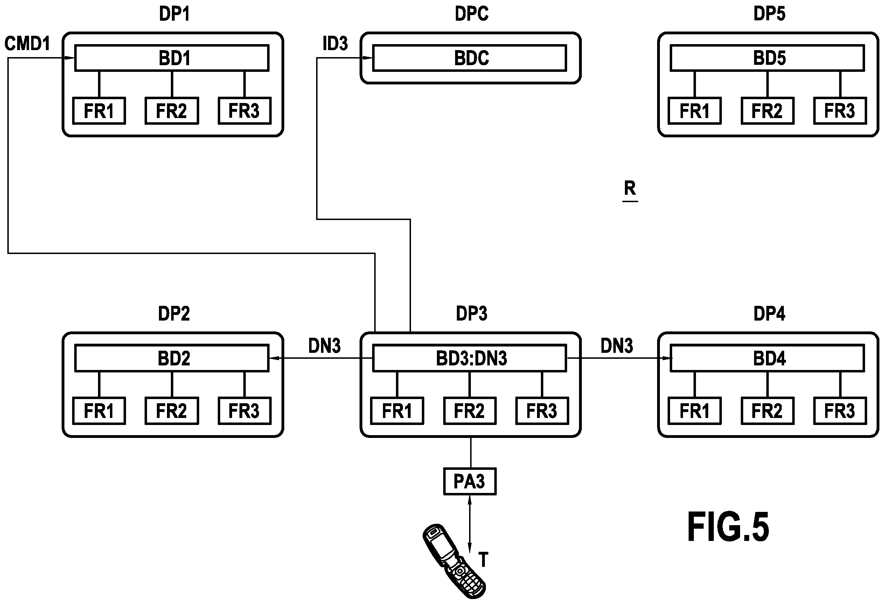

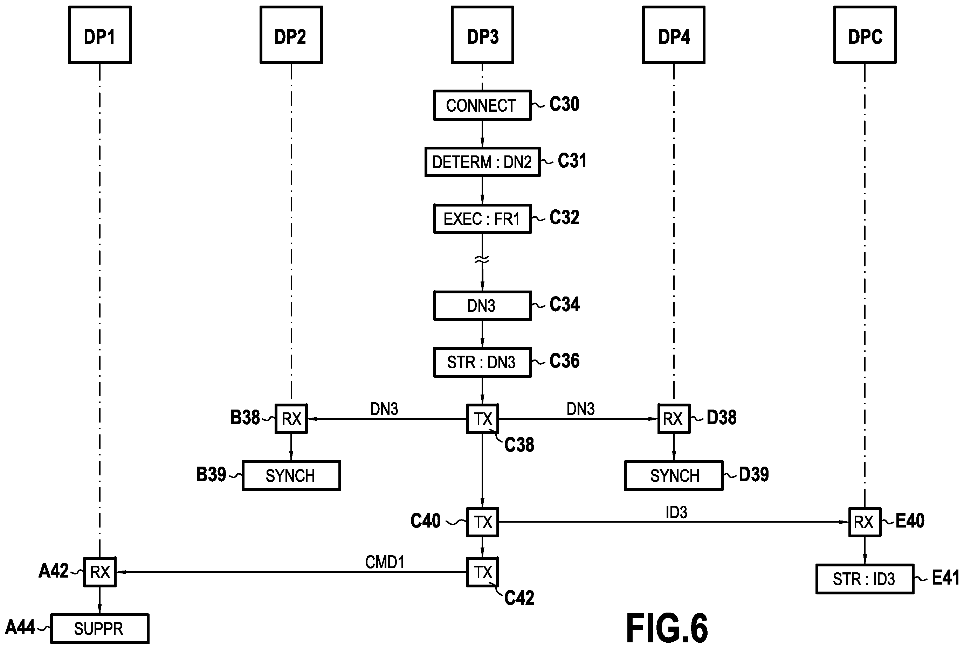

Un mode de réalisation particulier est à présent décrit en référence aux **figures 5** et **6****.** Plus précisément, le dispositif DP3, présentant une structure identique celle du dispositif DP2, met en œuvre un procédé de synchronisation en exécutant le programme d'ordinateur PG.

On considère ici, comme état initial, l'état du réseau mobile R à l'issue du procédé de synchronisation décrit ci-avant en référence à la **figure 4****.**

On suppose à présent que le terminal mobile T se déplace et rentre dans le voisinage (la zone géographique) du dispositif DP3. Le terminal mobile T se connecte alors au réseau R via un point d'accès PA3 et s'enregistre auprès du réseau.

Au cours d'une étape de connexion C30 (analogue à l'étape B2 illustrée en **figure 3****),** le dispositif DP3 établit une connexion avec le terminal mobile T pour exécuter, en tant que nouveau dispositif principal, la fonction réseau FR1 qu'il héberge en association avec ledit terminal mobile T. Pour ce faire, le dispositif DP3 échange par exemple des données avec le terminal T afin que ce dernier soit reconnu et que la fonction réseau FR1 puisse être exécutée.

On comprend ici que le dispositif DP2 n'est plus dispositif principal dans la mesure où il n'est plus le mieux placé pour exécuter la fonction réseau FR1 pour le compte du terminal T.

Lors d'une étape C31, le dispositif DP3 détermine (ou récupère) les données de contexte DN2 précédemment enregistrées dans sa base de données BD3 lors de l'étape C10. Le dispositif DP3, agissant en tant que dispositif principal, exécute (étape C32) ensuite la fonction réseau FR1 à partir des données de contexte DN2 prises en tant que données d'entrée.

L'invention permet ainsi avantageusement d'augmenter de façon importante la réactivité du réseau mobile R pour exécuter la fonction réseau FR1 lorsque le terminal mobile T est en mouvement. De plus, comme déjà indiqué, le coût de cette synchronisation en termes de ressources du réseau R est limité du fait que seuls les dispositifs DP voisins du dispositif principal sont mis à jour par ce dernier.

Toujours en référence aux **figures 5** et **6****,** on suppose ensuite dans cet exemple que le dispositif DP3 agit (étapes C34-C38) en tant que dispositif principal de la même manière que le dispositif DP2 lors des étapes B4-B8 représentées en **figure 4****.** Plus particulièrement, on suppose que le dispositif DP3 détermine (étape C34) de nouvelles données de contexte DN3 associées au terminal mobile T. Le dispositif DP3 peut en effet enrichir ou modifier régulièrement les données de contexte DN3 du terminal T. Le dispositif DP3 enregistre (étape C36) ensuite ces nouvelles données de contexte DN3 dans sa base de données BD3. Le dispositif DP3, agissant en tant que dispositif principal, envoie (étape C38) les nouvelles donnés de contexte DN3 à une sélection parmi les dispositifs DP du réseau mobile R, à savoir aux dispositifs voisins DP2 et DP4 dans cet exemple. Les dispositifs secondaires DP2, DP4 reçoivent les données de contexte DN3 (étapes B38, D38 respectives) et se synchronisent ensuite (étapes B39, D39 respectives), à partir des données de contexte DN3 reçues. Plus particulièrement, les dispositifs secondaires DP2, DP4 enregistrent les données de contexte DN3 reçues lors des étapes B38, D38 afin de mettre à jour leur base de données BD2, BD4.

Selon un exemple particulier, le dispositif DP3, agissant en tant que dispositif principal, envoie en outre avantageusement (étape C40) son identifiant ID3 au dispositif central DPC. Le dispositif central DPC reçoit l'identifiant ID3 du dispositif DP3 (étape E40) puis l'enregistre dans sa base de données centrale BDC (étape E41). Comme expliqué ultérieurement, cet enregistrement E41 (de la même manière que l'enregistrement E14 en **figure 4****)** permet par la suite au dispositif central DPC d'indiquer à un dispositif DP, autres que les dispositifs principal et secondaires DP2-DP4, l'identité du dispositif principal actuel DP3.

Selon un exemple particulier, le dispositif DP3, agissant en tant que dispositif principal, envoie (étape C42) en outre une commande de suppression CMD1 à chaque dispositif DP du réseau mobile R (à savoir DP1 dans cet exemple) qui n'est plus maintenu synchronisé et qui est susceptible de détenir en mémoire des données de contexte obsolètes du terminal T. Cette commande de suppression cause la suppression des données de contexte obsolètes enregistrées par le ou les dispositifs destinataires, dits dispositifs obsolètes. Comme illustré en **figures 5** et **6****,** le dispositif DP1 (ancien dispositif secondaire) reçoit la commande de suppression CMD1 lors d'une étape de réception A42. En réponse à cette commande CMD1, le dispositif DP1 supprime (étape A44) les données de contexte DN2, précédemment reçues lors de l'étape A8 **(****figure 4****),** de sa base de données BD1.

Le dispositif DP3 identifie par exemple le ou les dispositifs obsolètes DP, à qui une commande de suppression CMD1 doit être envoyée, à partir des données de contexte DN2 que le dispositif DP3 avait précédemment enregistrées dans sa base de données BD3 (lors de l'étape C10 en **figure 4****).** Ainsi, dans un exemple particulier, le dispositif DP3 identifie, en tant que dispositifs obsolètes DP vers lesquels une commande de suppression CMD1 doit être envoyée, le ou les dispositifs DP qui étaient traités en tant que dispositifs secondaires par le précédent dispositif principal DP2 (lors de l'étape B8 en **figure 4****)** et qui ne sont plus traités en tant que dispositifs secondaires par le nouveau dispositif principal DP3. Le nouveau dispositif principal DP3 peut également envoyer une telle commande de suppression à un précédent dispositif principal DP si celui-ci n'est pas traité comme dispositif secondaire par le dispositif DP3.

L'identification du ou des dispositifs obsolètes est par exemple réalisée à partir des données de contexte DN2 reçues et enregistrées lors des étapes E12, E14 **(****figure 4****).** Pour ce faire, les données de contexte DN2 reçues lors de l'étape E12 par le dispositifs DP3 contiennent par exemple un identifiant qui identifie le dispositif DP2 en tant que dispositif principal. A partir de cet identifiant, le nouveau dispositif principal DP3 est alors capable de déterminer les dispositifs obsolètes DP vers lesquels une commande de suppression CMD1 est à envoyer. Cela suppose que le dispositif DP3 connaissent la topologie du réseau mobile R et, plus particulièrement, le ou les dispositifs secondaires associés à chaque dispositif DP agissant en tant que dispositif principal.

L'envoi d'une telle commande de suppression permet avantageusement d'éviter que des données de contexte qui ne sont plus à jour (obsolètes) soient gardées en mémoire par un ou des dispositifs DP du réseau mobile R. Il est ainsi possible de garantir une bonne cohérence des données de contexte dans le réseau mobile R.

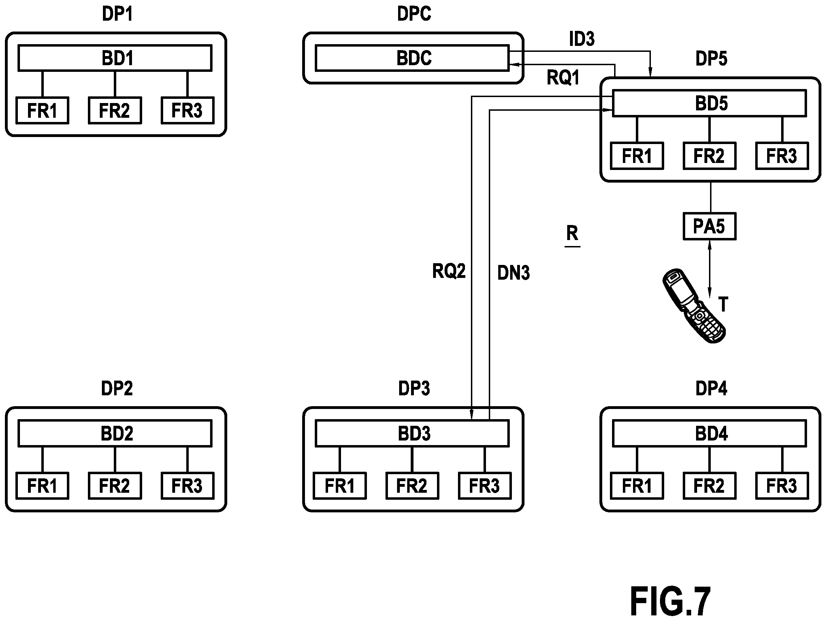

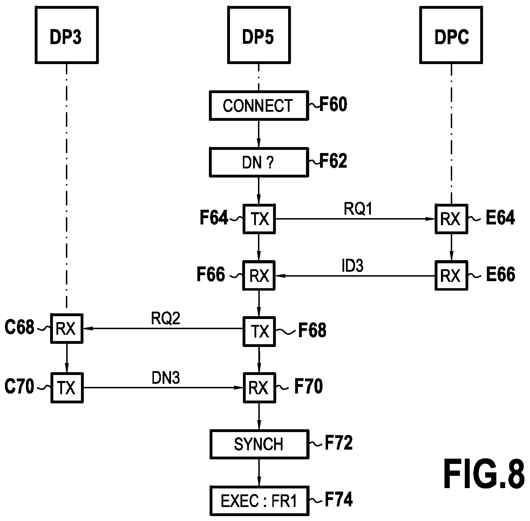

Un mode de réalisation particulier est à présent décrit en référence aux **figures 7** et **8****.** Plus précisément, le dispositif DP5, présentant une structure identique à celle du dispositif DP2, met en œuvre un procédé de synchronisation en exécutant le programme d'ordinateur PG.

On considère ici, comme état initial, l'état du réseau mobile R à l'issue du procédé de synchronisation décrit ci-avant en référence aux **figures 5** et **6****.**

On suppose à présent que le terminal mobile T se déplace et rentre dans le voisinage (la zone géographique) du dispositif DP5. Le terminal mobile T se connecte alors au réseau R via un point d'accès PA5 et s'enregistre auprès du réseau R. Dans cet exemple, le terminal mobile T est passé du voisinage du dispositif DP3 au voisinage du dispositif DP5 sans être détecté par le dispositif DP4. Ce cas peut se produire par exemple si le terminal mobile T se déplace à grande vitesse ou si le terminal mobile T était en état de veille lors de son déplacement.

Au cours d'une étape de connexion F60 (analogue aux étapes B2 et C30 illustrées en **figures 4** **et** **6****),** le dispositif DP5 établit une connexion avec le terminal mobile T pour exécuter, en tant que nouveau dispositif principal, la fonction réseau FR1 qu'il héberge en association avec ledit terminal mobile T. Pour ce faire, le dispositif DP5 échange par exemple des données avec le terminal T afin que ce dernier soit reconnu et que la fonction réseau FR1 puisse être exécutée.

On comprend ici que le dispositif DP3 n'est plus dispositif principal (comme en **figure 5****)** dans la mesure où il n'est plus le mieux placé pour exécuter la fonction réseau FR1 pour le compte du terminal T.

Au cours d'une étape de détermination F62, le dispositif DP5 cherche les données de contexte du terminal T dans sa base de données BD5. Dans cet exemple particulier, le dispositif DP5 n'a pas été préalablement synchronisé (par exemple lors de l'étape C38 illustrée en **figure 6****)** par le dispositif DP3 agissant alors en tant que dispositif principal. Dans ce cas, le dispositif DP5 détecte (étape F62) qu'aucune donnée de contexte, associée au terminal mobile T, n'est contenue dans sa mémoire associée BD5.

Le dispositif DP5 récupère ensuite (étapes F64-F66), auprès du dispositif centralisé DPC du réseau mobile R, l'identifiant du dispositif DP qui était précédemment connecté au terminal mobile T pour exécuter, en tant que dispositif principal à la place du dispositif DP5, la fonction réseau FR1 en association avec le terminal mobile T.

Plus précisément, le dispositif DP5 envoie (étape F64) une requête RQ1 au dispositif central DPC afin de connaître le dispositif DP qui a traité, en tant que précédent dispositif principal, avec le terminal T. Le dispositif central DPC reçoit la requête RQ1 (étape E64) et, dans cet exemple, retourne (étape E66) un message contenant l'identifiant ID3 du dispositif DP3, qu'il avait précédemment reçu (étape E40 illustrée en **figure 6****).**

Le dispositif DP5 envoie (étape F68) ensuite une requête de synchronisation RQ2 à cet ancien dispositif principal DP3 de sorte à récupérer les données de contexte DN3 enregistrées par ce dispositif DP3 (lors de l'étape C36 illustrée en **figure 6****).** Le dispositif DP3 reçoit la requête de synchronisation RQ2 (étape C68) et, en réponse à celle-ci, envoie (étape C70) les données de contexte DN3 au dispositif DP5 qui reçoit celles-ci lors de l'étape F70.

Le dispositif DP5 se synchronise (étape F72) alors avec le dispositif DP3. Autrement dit, le dispositif DP5 met à jour sa base de données BD5 en y enregistrant les données de contexte DN3 reçues lors de l'étape F70. Le dispositif DP5 exécute (étape F74) ensuite la fonction réseau FR1 pour le terminal T, cette fonction FR1 prenant en tant que données d'entrée les données de contexte DN3.

Le dispositif DP5 peut ensuite traiter les dispositifs secondaires DP associés, ainsi que les éventuels dispositifs obsolètes (DP3 par exemple), de la même manière que les dispositifs DP2 et DP3 agissant successivement en tant que dispositif principal.

Il est ainsi possible de synchroniser à la demande un dispositif DP dans le réseau mobile R lorsque celui n'a pas été maintenu synchronisé et a besoin de données de contexte pour exécuter une fonction réseau FR.

A noter que, dans le mode de réalisation ci-dessus représenté en **figures 7** et **8****,** le nouveau dispositif principal DP5 est capable de déterminer quel était le précédent dispositif principal (DP3) grâce au dispositif central DPC qui garde cette information de manière centralisée dans le réseau mobile R. Dans certains cas, il est toutefois possible que le dispositif central DPC ne dispose pas de cette information, comme par exemple lorsque le terminal T s'enregistre pour la première fois auprès du réseau mobile R (première utilisation). Dans ce cas, le dispositif central DPC envoie, lors de l'étape E66, un message indiquant que l'identifiant du précédent dispositif principal n'est pas disponible. Dans un cas particulier, le dispositif central DPC envoie par exemple, au dispositif DP5, des données de profil (données statiques de souscription) associées au terminal mobile T. Le dispositif détermine alors, à partir de ces donnée de profil reçues, les données de contexte du terminal mobile T (au lieu d'exécuter les étapes F68-F72 comme illustré en **figure 8****).**

Dans un mode de réalisation particulier, une fonction réseau FRLOC (non représentée) est mise en œuvre dans le réseau mobile R, par exemple par le dispositif central DPC ou par une autre entité du réseau R. Cette fonction permet, lorsqu'elle est exécutée, d'estimer quel sera le prochain dispositif DP a agir en tant que dispositif principal, sur la base d'un mouvement du terminal mobile T. Dans ce cas, cette fonction cause par exemple l'envoi, au dispositif principal actuel (DP5 par exemple), de l'identifiant du probable prochain dispositif principal. En réponse à cet envoi, le dispositif principal actuel (DP5) est alors configuré pour envoyer ses données de contexte à jour uniquement à ce probable prochain dispositif principal. Cette variante permet avantageusement de limiter encore d'avantage les ressources réseaux nécessaires pour effectuer le synchronisation selon l'invention tout en assurant une bonne réactivité du réseau mobile R pour exécuter la fonction réseau FR1.

Dans les modes de réalisation et variantes décrits ci-avant, le procédé de synchronisation de l'invention est mis en œuvre dans différents dispositif DP du réseau mobile, selon le cas considéré, afin de faciliter la compréhension de l'invention, notamment lorsque le terminal mobile T se déplace. On comprendra cependant que chaque dispositif DP du réseau mobile R est configuré pour réaliser les divers étapes décrites ci-avant dans un contexte analogue. Par exemple, le dispositif DP2, agissant en tant que dispositif principal dans le procédé de synchronisation représenté en **figure 4****,** peut obtenir, avant l'étape B2, des données de contexte à jour d'un autre dispositif DP agissant alors en tant que dispositif principal, comme décrit par exemple en référence à l'étape C31 **(****figure 6****).** Dans un exemple particulier, le dispositif DP2, agissant en tant que dispositif principal dans le procédé de synchronisation représenté en **figure 4****,** peut causer la suppression de données de contexte obsolètes de façon analogue aux étapes C40-C42 exécutées par le dispositif DP3 dans le mode de réalisation illustré en **figure 6****.** Dans un exemple particulier, le dispositif DP2, agissant en tant que dispositif principal dans le procédé de synchronisation représenté en **figure 4****,** peut déterminer les données de contexte du terminal T de façon analogue aux étapes F60-F72 exécutées par le dispositif DP5 dans le mode de réalisation illustré en **figure 8****.**

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de synchronisation mis en œuvre, dans un réseau mobile (R), par un premier dispositif (DP2) hébergeant une fonction réseau (FR1) servant à la connexion d'un terminal mobile au réseau mobile, ledit réseau mobile comportant au moins un deuxième dispositif (DP1, DP3-DP5) hébergeant ladite fonction réseau, le procédé comprenant les étapes suivantes :
- établissement (S2 ; B2) d'une connexion avec un terminal mobile (T) pour exécuter, en tant que dispositif principal, la fonction réseau en association avec ledit terminal mobile ;
- détermination (S4 ; B4) de données de contexte (DN2) associées au terminal mobile, lesdites données de contexte étant des données prises en entrée par la fonction réseau pour s'exécuter de sorte à permettre la connexion du terminal mobile au réseau mobile ;
- enregistrement (S6 ; B6) des données de contexte dans une mémoire (BD2) associée audit premier dispositif ; et
- envoi (S8 ; B8) des données de contexte à au moins un deuxième dispositif (DP1, DP3), dit dispositif secondaire, hébergeant ladite fonction réseau dans ledit réseau mobile de sorte à synchroniser les données de contexte (DN2) enregistrées par le premier dispositif et ledit au moins un dispositif secondaire.

2. Procédé selon la revendication 1, dans lequel, lors de l'étape d'envoi (B8), le premier dispositif n'envoie que des modifications détectées dans lesdites données de contexte par rapport à des anciennes données de contexte, dudit terminal mobile, enregistrées en local avant ladite étape de détermination des données de contexte.

3. Procédé selon la revendication 1 ou 2, dans lequel le réseau mobile (R) comprend une pluralité de deuxièmes dispositifs (DP) hébergeant ladite fonction réseau (FR1), et
dans lequel, lors de l'étape d'envoi (B8), le premier dispositif envoie les données de contexte seulement à une sélection d'au moins un dispositif secondaire (DP1, DP3) parmi la pluralité de deuxièmes dispositifs (DP1, DP3-DP5) du réseau mobile de sorte qu'au moins un deuxième dispositif non sélectionné (DP4, DP5) ne soit pas synchronisé avec le premier dispositif.

4. Procédé selon la revendication 3, le procédé comprenant en outre une étape d'obtention, par le premier dispositif (DP2), d'une liste identifiant au moins un deuxième dispositif voisin du premier dispositif dans la topologie du réseau mobile (R), ladite sélection d'au moins un dispositif secondaire consistant en ledit au moins un deuxième dispositif voisin identifié dans ladite liste.

5. Procédé selon la revendication 3 ou 4, dans lequel la sélection d'au moins un dispositif secondaire vers lequel les données de contexte sont envoyées lors de l'étape d'envoi est enregistrée dans une mémoire locale (BD2) associée au premier dispositif.

6. Procédé selon la revendication 3, dans lequel le procédé comprend la réception d'un identifiant d'un unique dispositif secondaire dans le réseau mobile, dans lequel la sélection d'au moins un dispositif secondaire, vers lequel les données de contexte sont envoyées lors de l'étape d'envoi, ne comporte que ledit unique dispositif secondaire.

7. Procédé selon l'une quelconque des revendications 3 à 6, comprenant les étapes suivantes :
- détection d'au moins un deuxième dispositif non sélectionné (DP1), dit dispositif obsolète, vers lequel les données de contexte ne sont pas envoyées lors de l'étape d'envoi et détenant dans une mémoire associée des données de contexte obsolètes du terminal mobile ; et
- envoi (C42) d'une commande de suppression (CMD1) audit au moins un dispositif obsolète pour causer la suppression des données de contexte obsolètes.

8. Procédé selon la revendication 7, dans lequel le procédé comprend la réception d'un identifiant d'un deuxième dispositif du réseau mobile précédemment connecté audit terminal mobile pour exécuter, en tant que dispositif principal à la place dudit premier dispositif, la fonction réseau en association avec ledit terminal mobile ;
ledit au moins un dispositif obsolète étant déterminé à partir dudit identifiant.

9. Procédé selon l'une quelconque des revendications 1 à 8, comprenant l'envoi (B12 ; C40) d'un identifiant du premier dispositif à un dispositif central du réseau mobile pour mémoriser de façon centralisée dans le réseau mobile l'identité du premier dispositif en tant que dispositif principal.

10. Procédé selon l'une quelconque des revendications 1 à 9, comprenant, après l'étape d'envoi des données de contexte, les étapes suivantes :
- réception (C68) d'une requête (RQ2) de mise à jour provenant d'un deuxième dispositif (DP5) du réseau mobile vers lequel les données de contexte (DN3) n'ont pas été envoyées lors de l'étape d'envoi ; et
- envoi (C70) des données de contexte (DN3) en réponse à ladite requête de mise à jour.

11. Procédé selon l'une quelconque des revendications 1 à 10, dans lequel l'étape de détermination de données de contexte associées au terminal mobile (T) comprend, après l'étape d'établissement d'une connexion avec un terminal mobile :
- détection (F62) qu'aucune donnée de contexte, associée au terminal mobile, n'est contenue dans la mémoire (BD5) associée audit premier dispositif (DP5) ;
- récupération (F66), auprès d'un dispositif centralisé (DPC) du réseau mobile, d'un identifiant (ID3) d'un deuxième dispositif du réseau mobile précédemment connecté audit terminal mobile pour exécuter, en tant que dispositif principal à la place dudit premier dispositif, la fonction réseau (FR1) en association avec ledit terminal mobile ; et
- envoi (F68) d'une requête de synchronisation au deuxième dispositif correspondant audit identifiant de sorte à récupérer des données de contexte enregistrées par ledit deuxième dispositif.

12. Programme d'ordinateur (PG1) comportant des instructions pour l'exécution des étapes d'un procédé selon l'une quelconque des revendications 1 à 11 lorsque ledit programme est exécuté par un ordinateur.

13. Support d'enregistrement lisible par un ordinateur sur lequel est enregistré un programme d'ordinateur (PG1) comprenant des instructions pour l'exécution des étapes d'un procédé selon l'une quelconque des revendications 1 à 11.

14. Dispositif (DP) hébergeant une fonction réseau (FR1) dans un réseau mobile, ledit réseau mobile comportant au moins un deuxième dispositif (DP) hébergeant ladite fonction réseau, servant à la connexion d'un terminal mobile au réseau mobile le dispositif comprenant :
- un module (MD2) d'établissement de connexion pour établir une connexion avec un terminal mobile pour que ledit dispositif exécute, en tant que dispositif principal, la fonction réseau en association avec ledit terminal mobile ;
- un module (MD4) de détermination pour déterminer des données de contexte associées au terminal mobile, lesdites données de contexte étant des données prises en entrée par la fonction réseau pour s'exécuter de sorte à permettre la connexion du terminal mobile au réseau mobile ;
- un module (MD6) d'enregistrement pour enregistrer des données de contexte dans une mémoire associée audit premier dispositif ; et
- un module (MD8) d'envoi pour envoyer les données de contexte à au moins un deuxième dispositif, dit dispositif secondaire, hébergeant ladite fonction réseau dans ledit réseau mobile de sorte à synchroniser les données de contexte enregistrées par ledit dispositif et ledit au moins un dispositif secondaire.

15. Dispositif selon la revendication 14, dans lequel le réseau mobile comprend une pluralité de deuxièmes dispositifs hébergeant ladite fonction réseau,
le module (MD8) d'envoi étant configuré pour envoyer les données de contexte seulement à une sélection d'au moins un dispositif secondaire parmi la pluralité de deuxièmes dispositifs du réseau mobile de sorte qu'au moins un deuxième dispositif non sélectionné ne soit pas synchronisé avec le premier dispositif.

## Patentansprüche

1. Synchronisationsverfahren, das in einem Mobilnetz (R) von einer ersten Vorrichtung (DP2) umgesetzt wird, die eine Netzwerkfunktion (FR1) beherbergt, die der Verbindung eines mobilen Endgeräts mit dem Mobilnetz dient, wobei das Mobilnetz mindestens eine zweite Vorrichtung (DP1, DP3-DP5) aufweist, die die Netzwerkfunktion beherbergt, das Verfahren umfassend die folgenden Schritte:
- Aufbauen (S2; B2) einer Verbindung mit einem mobilen Endgerät (T) zur Ausführung der Netzwerkfunktion als Hauptvorrichtung in Verbindung mit dem mobilen Endgerät;
- Bestimmen (S4; B4) von Kontextdaten (DN2), die dem mobilen Endgerät zugeordnet sind, wobei die Kontextdaten Daten sind, die durch die Netzwerkfunktion zur Ausführung eingangs genommen werden, um die Verbindung des mobilen Endgeräts mit dem Mobilnetz zu gestatten;
- Speichern (S6; B6) der Kontextdaten in einem Speicher (BD2), der der ersten Vorrichtung zugeordnet ist; und
- Senden (S8; B8) der Kontextdaten an mindestens eine zweite Vorrichtung (DP1, DP3), die Sekundärvorrichtung, die die Netzwerkfunktion im Mobilnetz beherbergt, um die Kontextdaten (DN2) zu synchronisieren, die von der ersten Vorrichtung und der mindestens einen Sekundärvorrichtung gespeichert werden.

2. Verfahren nach Anspruch 1, wobei beim Schritt des Sendens (B8) die erste Vorrichtung nur Änderungen sendet, die in den Kontextdaten bezogen auf alte Kontextdaten des mobilen Endgeräts festgestellt werden, die vor dem Schritt des Bestimmens der Kontextdaten lokal gespeichert werden.

3. Verfahren nach Anspruch 1 oder 2, wobei das Mobilnetz (R) eine Mehrzahl von zweiten Vorrichtungen (DP) umfasst, die die Netzwerkfunktion (FR1) beherbergen, und wobei beim Schritt des Sendens (B8) die erste Vorrichtung Kontextdaten nur an eine Auswahl von mindestens einer Sekundärvorrichtung (DP1, DP3) aus der Mehrzahl von zweiten Vorrichtungen (DP1, DP3-DP5) des Mobilnetzes sendet, so dass mindestens eine nicht ausgewählte zweite Vorrichtung (DP4, DP5) nicht mit der ersten Vorrichtung synchronisiert wird.

4. Verfahren nach Anspruch 3, wobei das Verfahren ferner einen Schritt des Beziehens, durch die erste Vorrichtung (DP2), einer Liste umfasst, die mindestens eine zweite Vorrichtung identifiziert, die der ersten Vorrichtung in der Topologie des Mobilnetzes (R) benachbart ist, wobei die Auswahl mindestens einer Sekundärvorrichtung aus der mindestens einen benachbarten zweiten Vorrichtung besteht, die in der Liste identifiziert ist.

5. Verfahren nach Anspruch 3 oder 4, wobei die Auswahl von mindestens einer Sekundärvorrichtung, an welche die Kontextdaten beim Schritt des Sendens gesendet werden, in einem lokalen Speicher (BD2) gespeichert wird, der der ersten Vorrichtung zugeordnet ist.

6. Verfahren nach Anspruch 3, wobei das Verfahren das Empfangen einer Kennung einer einzelnen Sekundärvorrichtung im Mobilnetz umfasst, wobei die Auswahl von mindestens einer Sekundärvorrichtung, an welche die Kontextdaten beim Schritt des Sendens gesendet werden, nur die einzelne Sekundärvorrichtung aufweist.

7. Verfahren nach einem der Ansprüche 3 bis 6, umfassend die folgenden Schritte:
- Feststellen mindestens einer nicht ausgewählten zweiten Vorrichtung (DP1), der veralteten Vorrichtung, an welche die Kontextdaten beim Schritt des Sendens nicht gesendet werden, und die in einem zugehörigen Speicher veraltete Kontextdaten des mobilen Endgeräts aufweist; und
- Senden (C42) eines Löschbefehls (CMD1) an die mindestens eine veraltete Vorrichtung, um die Löschung der veralteten Kontextdaten zu bewirken.

8. Verfahren nach Anspruch 7, wobei das Verfahren das Empfangen einer Kennung einer zweiten Vorrichtung des Mobilnetzes umfasst, die zuvor mit dem mobilen Endgerät verbunden war, um als Hauptvorrichtung anstelle der ersten Vorrichtung die Netzwerkfunktion in Verbindung mit dem mobilen Endgerät auszuführen;
wobei die mindestens eine veraltete Vorrichtung anhand der Kennung bestimmt wird.

9. Verfahren nach einem der Ansprüche 1 bis 8, umfassend das Senden (B12; C40) einer Kennung der ersten Vorrichtung an eine Zentralvorrichtung des Mobilnetzes, um die Identität der ersten Vorrichtung als Hauptvorrichtung zentral im Mobilnetz zu speichern.

10. Verfahren nach einem der Ansprüche 1 bis 9, umfassend, nach dem Schritt des Sendens der Kontextdaten, die folgenden Schritte:
- Empfangen (C68) einer Aktualisierungsanforderung (RQ2) von einer zweiten Vorrichtung (DP5) des Mobilnetzes, an welche die Kontextdaten (DN3) beim Schritt des Sendens nicht gesendet wurden; und
- Senden (C70) der Kontextdaten (DN3) in Reaktion auf die Aktualisierungsanforderung.

11. Verfahren nach einem der Ansprüche 1 bis 10, wobei der Schritt des Bestimmens von Kontextdaten, die dem mobilen Endgerät (T) zugeordnet sind, nach dem Schritt des Aufbauens einer Verbindung mit einem mobilen Endgerät, Folgendes umfasst:
- Feststellen (F62), dass kein Kontextdatenelement, das dem mobilen Endgerät zugeordnet ist, im Speicher (BD5) enthalten ist, der der ersten Vorrichtung (DP5) zugeordnet ist;
- Abrufen (F66), von einer zentralisierten Vorrichtung (DPC) des Mobilnetzes, einer Kennung (ID3) einer zweiten Vorrichtung des Mobilnetzes, die zuvor mit dem mobilen Endgerät verbunden war, um als Hauptvorrichtung anstelle der ersten Vorrichtung die Netzwerkfunktion (FR1) in Verbindung mit dem mobilen Endgerät auszuführen; und
- Senden (F68) einer Synchronisationsanforderung an die zweite Vorrichtung, die der Kennung entspricht, um Kontextdaten abzurufen, die von der zweiten Vorrichtung gespeichert werden.

12. Computerprogramm (PG1), aufweisend Anweisungen zur Ausführung der Schritte eines Verfahrens nach einem der Ansprüche 1 bis 11, wenn das Programm von einem Computer ausgeführt wird.

13. Computerlesbares Speichermedium, auf dem ein Computerprogramm (PG1) gespeichert ist, das Anweisungen für die Ausführung der Schritte eines Verfahrens nach einem der Ansprüche 1 bis 11 umfasst.

14. Vorrichtung (DP), die eine Netzwerkfunktion (FR1) in einem Mobilnetz beherbergt, wobei das Mobilnetz mindestens eine zweite Vorrichtung (DP) aufweist, die die Netzwerkfunktion beherbergt, die der Verbindung eines mobilen Endgeräts mit dem Mobilnetz dient, die Vorrichtung umfassend:
- ein Verbindungsaufbaumodul (MD2) zum Aufbau einer Verbindung mit einem mobilen Endgerät, damit die Vorrichtung als Hauptvorrichtung die Netzwerkfunktion in Verbindung mit dem mobilen Endgerät ausführt;
- ein Bestimmungsmodul (MD4) zur Bestimmung von Kontextdaten, die dem mobilen Endgerät zugeordnet sind, wobei die Kontextdaten Daten sind, die durch die Netzwerkfunktion zur Ausführung eingangs genommen werden, um die Verbindung des mobilen Endgeräts mit dem Mobilnetz zu gestatten;
- ein Speicherungsmodul (MD6) zur Speicherung von Kontextdaten in einem Speicher, der der ersten Vorrichtung zugeordnet ist; und
- ein Sendemodul (MD8) zum Senden der Kontextdaten an mindestens eine zweite Vorrichtung, die Sekundärvorrichtung, die die Netzwerkfunktion im Mobilnetz beherbergt, um die Kontextdaten zu synchronisieren, die von der Vorrichtung und der mindestens einen Sekundärvorrichtung gespeichert werden.

15. Vorrichtung nach Anspruch 14, wobei das Mobilnetz eine Mehrzahl von zweiten Vorrichtungen umfasst, die die Netzwerkfunktion beherbergen,
wobei das Sendemodul (MD8) dazu ausgebildet ist, Kontextdaten nur an eine Auswahl von mindestens einer Sekundärvorrichtung aus der Mehrzahl von zweiten Vorrichtungen des Mobilnetzes zu senden, so dass mindestens eine nicht ausgewählte zweite Vorrichtung nicht mit der ersten Vorrichtung synchronisiert wird.

## Claims

1. Method of synchronization implemented, in a mobile network (R), by a first device (DP2) hosting a network function (FR1) serving for the connection of a mobile terminal to the mobile network, said mobile network comprising at least one second device (DP1, DP3-DP5) hosting said network function, the method comprising the following steps:
- establishing (S2; B2) a connection with a mobile terminal (T) so as to execute, as main device, the network function in association with said mobile terminal;
- determining (S4; B4) context data (DN2) associated with the mobile terminal, said context data being data taken as input by the network function in order to execute, so as to allow the connection of the mobile terminal to the mobile network;
- recording (S6; B6) the context data in a memory (BD2) associated with said first device; and
- sending (S8; B8) the context data to at least one second device (DP1, DP3), termed secondary device, hosting said network function in said mobile network so as to synchronize the context data (DN2) recorded by the first device and said at least one secondary device.

2. Method according to Claim 1, in which, during the sending step (B8), the first device sends only modifications detected in said context data with respect to former context data, of said mobile terminal, which are recorded locally before said step of determining the context data.

3. Method according to Claim 1 or 2, in which the mobile network (R) comprises a plurality of second devices (DP) hosting said network function (FR1), and
in which, during the sending step (B8), the first device sends the context data only to a selection of at least one secondary device (DP1, DP3) from among the plurality of second devices (DP1, DP3-DP5) of the mobile network so that at least one unselected second device (DP4, DP5) is not synchronized with the first device.

4. Method according to Claim 3, the method furthermore comprising a step of obtaining, by the first device (DP2), a list identifying at least one neighbour second device of the first device in the topology of the mobile network (R), said selection of at least one secondary device consisting of said at least one neighbour second device identified in said list.

5. Method according to Claim 3 or 4, in which the selection of at least one secondary device to which the context data are sent during the sending step is recorded in a local memory (BD2) associated with the first device.

6. Method according to Claim 3, in which the method comprises the reception of an identifier of a single secondary device in the mobile network, in which the selection of at least one secondary device, to which the context data are sent during the sending step, comprises only said single secondary device.

7. Method according to any one of Claims 3 to 6, comprising the following steps:
- sending at least one unselected second device (DP1), termed obsolete device, to which the context data are not sent during the sending step and holding in an associated memory of the obsolete context data of the mobile terminal; and
- sending (C42) a deletion command (CMD1) to said at least one obsolete device so as to cause the deletion of the obsolete context data.

8. Method according to Claim 7, in which the method comprises the reception of an identifier of a second device of the mobile network previously connected to said mobile terminal so as to execute, as main device in place of said first device, the network function in association with said mobile terminal;
said at least one obsolete device being determined on the basis of said identifier.

9. Method according to any one of Claims 1 to 8, comprising the sending (B12; C40) of an identifier of the first device to a central device of the mobile network so as to store in a centralized manner in the mobile network the identity of the first device as main device.

10. Method according to any one of Claims 1 to 9, comprising, after the step of sending the context data, the following steps:
- receiving (C68) an updating request (RQ2) originating from a second device (DP5) of the mobile network to which the context data (DN3) have not been sent during the sending step; and
- sending (C70) the context data (DN3) in response to said updating request.

11. Method according to any one of Claims 1 to 10, in which the step of determining context data associated with the mobile terminal (T) comprises, after the step of establishing a connection with a mobile terminal:
- detecting (F62) that no context datum, associated with the mobile terminal, is contained in the memory (BD5) associated with said first device (DP5);
- retrieving (F66), from a centralized device (DPC) of the mobile network, an identifier (ID3) of a second device of the mobile network previously connected to said mobile terminal so as to execute, as main device in place of said first device, the network function (FR1) in association with said mobile terminal; and
- sending (F68) of a synchronization request to the second device corresponding to said identifier so as to retrieve context data recorded by said second device.

12. Computer program (PG1) comprising instructions for the execution of the steps of a method according to any one of Claims 1 to 11 when said program is executed by a computer.

13. Recording medium readable by a computer on which is recorded a computer program (PG1) comprising instructions for the execution of the steps of a method according to any one of Claims 1 to 11.

14. Device (DP) hosting a network function (FR1) in a mobile network, said mobile network comprising at least one second device (DP) hosting said network function, said network function serving for the connection of a mobile terminal to the mobile network, the device comprising:
- a connection establishment module (MD2) for establishing a connection with a mobile terminal so that said device executes, as main device, the network function in association with said mobile terminal;
- a determination module (MD4) for determining context data associated with the mobile terminal, said context data being data taken as input by the network function in order to execute, so as to allow the connection of the mobile terminal to the mobile network;
- a recording module (MD6) for recording context data in a memory associated with said first device; and
- a sending module (MD8) for sending the context data to at least one second device, termed secondary device, hosting said network function in said mobile network so as to synchronize the context data recorded by said device and said at least one secondary device.

15. Device according to Claim 14, in which the mobile network comprises a plurality of second devices hosting said network function,
the sending module (MD8) being configured to send the context data only to a selection of at least one secondary device from among the plurality of second devices of the mobile network so that at least one unselected second device is not synchronized with the first device.
